# EUROPEAN PATENT SPECIFICATION

(11) **EP 4 310 568 B1**
(45) Date of publication and mention of the grant of the patent: **28.10.2026**
(21) Application number: 22185519.0
(22) Date of filing: 18.07.2022
(51) Int. Cl.: G02B 7/02, G02B 7/36

(54) **LENS ALIGNMENT METHOD, LENS ALIGNMENT APPARATUS AND LENS ALIGNMENT SOFTWARE**
LINSENAUSRICHTUNGSVERFAHREN, LINSENAUSRICHTUNGSVORRICHTUNG UND LINSENAUSRICHTUNGSSOFTWARE
PROCÉDÉ D'ALIGNEMENT DE LENTILLE, APPAREIL D'ALIGNEMENT DE LENTILLE ET LOGICIEL D'ALIGNEMENT DE LENTILLE

(43) Date of publication of application: 24.01.2024
(73) Proprietor: Aptiv Technologies AG, 8200 Schaffhausen (CH)
(72) Inventor: KRZANOWSK, Maciej, 2 Dublin (IE); SZELA, Jakub, 2 Dublin (IE)
(74) Representative: Gaunt, Thomas Derrick

(56) References cited:
- CN-A- 114 598 859
- JP-A- 2005 055 618
- JP-A- 2011 205 263
- US-A1- 2018 004 004
- KWON JONG-HOON ET AL: "Performance Evaluation of MTF Peak Detection Methods by a Statistical Analysis for Phone Camera Modules", vol. 20, no. 1, 25 February 2016 (2016-02-25), KR, pages 150 - 155, XP093009704, ISSN: 1226-4776, Retrieved from the Internet <URL:http://koreascience.or.kr/article/JAKO201609651159336.pdf> DOI: 10.3807/JOSK.2016.20.1.150

## Description

### Field

The present disclosure relates to a lens alignment method, lens alignment software, lens alignment apparatus, and a vehicle camera manufactured using the method. The disclosure is particularly relevant to automotive cameras having a long operating life, as well as a manufacturing method for providing the same.

### Background

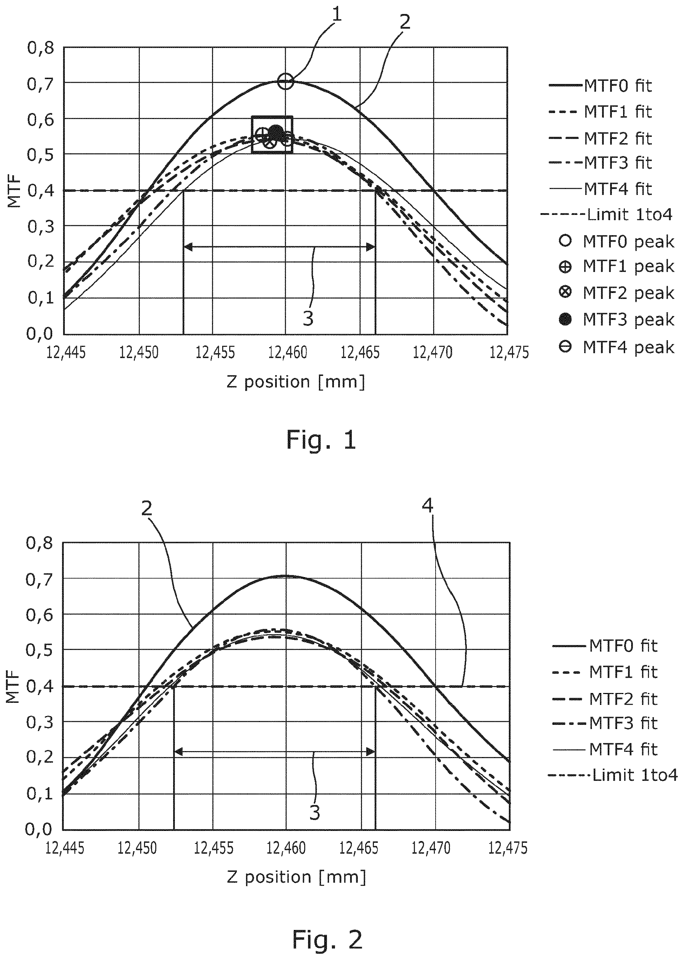

Automotive cameras are required to provide a high optical performance over a long operating life. In order to maximise optical performance, the manufacturing process includes a multi-axis lens alignment step to achieve optimized alignment between the lens and the imager. During this step, in order to optimise the depth of focus, the position of the lens is adjusted relative to the imager so that one or more regions of interest (ROI) are in focus. In this respect, Figure 1 shows a typical Modulation Transfer Function (MTF) response chart used for this alignment step when assembling an automotive camera. Each region of interest has an associated MTF curve 2 characteristic of the optical performance for that region, and the position of the lens is adjusted so that the measured MTF peaks 1 are as close together as possible. Consequently, the MTF peak 1 for each respective MTF curve 2 indicates the maximum focus for the associated tested region of interest. Accordingly, by adjusting the position of the lens, the MTF peaks 1 may be aligned so that the optical performance is optimised for the particular regions of interest. This alignment process may also include compensation for adhesive shrinkage and desired focussing distance. Once aligned, the lens is then initially fixed in that position using a UV curable adhesive, and later thermally cured to secure the fixing. The adhesive shrinkage compensation may compensate for both the UV and thermal curing stages.

In use, however, the optical performance of a camera will typically degrade over time, as the lens shifts out of alignment relative to the imager. For example, built-in stresses within components in the assembly will relax over time, particularly as automotive cameras are subjected to mechanical and thermal stress cycles. This leads to the shifting of the position of the lens through the operating lifespan of the camera.

A consequence of the above shifting is that the MTF curves 2 associated with some regions of interest will move over time, with some regions being affected more than others. For instance, a camera may have a minimum MTF performance threshold, such as MTF 0,4, and the camera's depth of focus 3 is therefore defined by the positions where all the MTF curves 2 are above that threshold. At the same time, lenses typically exhibit corner defocus where a narrower depth of focus is achieved at peripheral regions of interest. Consequently, where the MTF curves associated with these ROIs shift, the camera's depth of focus 3 may be reduced, because these ROIs may no longer be adequately resolved. For example, in Figure 1, the depth of focus 3 is defined by MTF4 curve at the near Z position and MTF3 curve at the far Z position. Therefore, if the MTF4 curve shifts to a higher Z position or the MTF3 curve shifts to a lower Z position, the depth of focus 3 is reduced. As a consequence, the camera may begin to drop below its required specifications.

US 2018/004004 A1 discloses an automatic robotic alignment of optical components during manufacture or testing and, more particularly, to apparatus and methods for automatically calibrating an ultraviolet (UV) source used for curing adhesive, a motorized optical target used for aligning optical components and an automatic surface finder used to find a surface on which adhesive is to be dispensed.

CN 114 598 859 A discloses a method for prejudging calibration performance of lens assembly to be assembled and method for assembling camera module.

JP 2011 205263 A discloses a method for adjusting the position of an image sensor with respect to a photographing lens, a method and apparatus for manufacturing a camera module having a lens unit and an element unit, and a camera module.

JP 2005 055618 A discloses a projector for obtaining a focus position using reflected light of an image projected on a screen while moving a projection lens optical system, and focusing the image projected on the screen, a focus adjustment method thereof, and a focus adjustment program.

Accordingly, there remains a need for an automotive camera with a longer operating lifespan.

### Summary

According to a first aspect, there is provided a lens alignment method including: scanning a plurality of regions of interest of the lens to determine optical characteristics for each region of interest as the position of the lens relative to the imager is adjusted; determining a focus window for each region of interest based on the optical characteristics, wherein determining the focus windows comprises determining positions where the optical characteristics are above a predetermined threshold; and adjusting the relative position of the lens to the imager based on the determined positions of the focus windows relative to one another, wherein the step of adjusting the position of the lens comprises determining a centre depth of focus for each focus window and adjusting the position of the lens in relation to the determined centre depth of focuses.

In this way, the alignment process may maximise the depth of focus across all the applicable regions of interest. Consequently, a camera with a high long-life performance may be achieved because, even as the lens shifts position over time, the regions of interest will be above the minimum optical performance requirements for longer. Therefore, better compensation of defocus related to ageing may be achieved.

In this way, the threshold may be used as a minimum optical performance requirement, and the position where those optical performance requirements are met for each region of interest can be determined based on the optical characteristics, such as MTF characteristics. In this way, the focus provided by each region of interest is set as a midpoint between the edges of its focus window. Consequently, accurate focussing may be achieved, even if the MTF characteristics are non-gaussian.

In embodiments, the scan includes determining MTF characteristics as the distance between the lens and the imager is varied.

In embodiments, the step of adjusting the position of the lens includes adjusting the position for aligning the focus windows to within a predetermined range. In this way, the combined focus window, where the camera meets all optical performance requirements, may be maximised.

In embodiments, the step of adjusting the position of the lens includes adjusting one or more of the pitch, yaw, roll, position in the transverse plane, and position in the camera axis. It will be understood that the relative positions between the lens and imager may be adjusted by moving either the lens or the imager sensor or both. As such, up to 12 degrees of freedom control may be provided.

In embodiments, the step of adjusting the position of the lens includes applying a material compensation factor for compensating for material tolerances. In this way, known material properties, such as shrinkage properties of the adhesive used to fix the lens, may be accounted for.

In embodiments, the step of adjusting the material tolerances comprise material shrinkage and/or predicted aging movement characteristics. In this way, known adhesive shrinkage properties and/or ageing effects may be pre-emptively accounted for.

In embodiments, the step of adjusting the position of the lens includes applying a corner weighting factor for compensating for corner defocus. In this way, focus at the corners may be prioritised.

In embodiments, the lens alignment method further includes the step of providing the lens on a mount relative to the imager, wherein a curable adhesive is provided between the mount and the lens for fixing the lens in position when cured.

In embodiments, the method further comprises the step of fixing the position of the lens once its position is adjusted.

### Brief Description of Drawings

Illustrative embodiments will now be described with reference to the accompanying drawings in which:
Figure 1 shows a typical MTF response chart for an automotive camera during a conventional lens alignment process;
Figure 2 shows a MTF response chart for an automotive camera during a lens alignment process according to an embodiment;
Figure 3 shows a flow diagram of a lens alignment process according to an illustrative embodiment;
Figure 4 shows a MTF response chart for an automotive camera during a scan at the start of the lens alignment process according to the illustrative embodiment; and
Figure 5 shows a MTF response chart for an automotive camera during a scan at the end of the lens alignment process according to the illustrative embodiment.

### Detailed Description

In contrast to conventional lens alignment methodologies, embodiments described herein are based on observing overall MTF performance, rather than alignment of the MTF peaks 1. In this connection, Figure 2 shows a MTF response chart for an automotive camera during a lens alignment process according to an illustrative embodiment. As shown, each MTF region of interest (ROI) has an associated MTF response curve 2 based on the optical performance characteristics for that region of interest of the image. At the same time, a camera will be required to meet certain optical performance requirements designated by an MTF threshold 4. In this example, the MTF threshold is 0,4. Accordingly, for each MTF region of interest, there is a specific depth of focus for that ROI where its MTF response is above the particular threshold. In the lens alignment method of the present embodiment, the lens position is adjusted so that these focus windows are as aligned as possible for maximising the camera's combined focus window 3. As such, across this combined focus window 3 all the MTF curves 2 meet the minimum optical performance requirements set by the threshold 4. It will be understood that the number of regions of interest will be dependent on the particular camera requirements.

With the above method, by maximising the depth of focus 3 by adjusting the ROI focus windows, a longer camera operational life may be achieved. This is because, although defocussing related to ageing causes shifting of the MTF curves, the starting point is a larger window where sufficient optical performance is achieved. Consequently, the camera can maintain focus for longer.

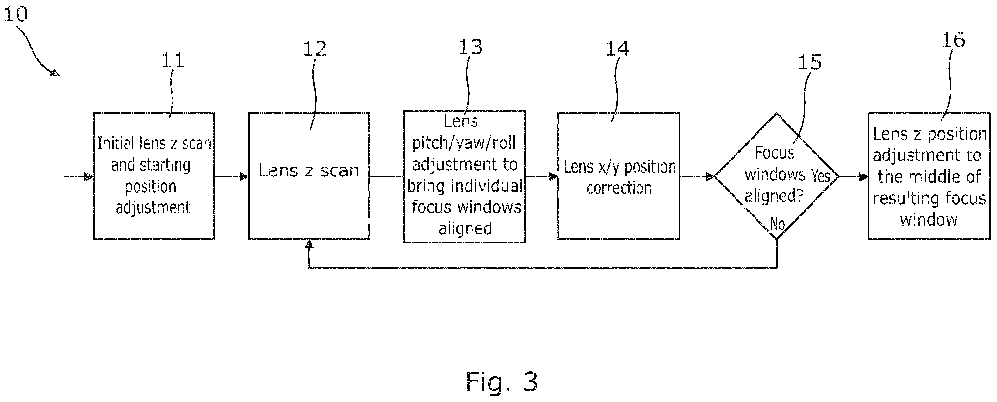

In this connection, to explain this further, Figure 3 shows a flow diagram of a lens alignment process 10 according to the illustrative embodiment. This lens alignment process 10 will typically form part of a camera assembly process in which an image sensor subassembly is first produced, and then a lens assembly is fitted to it using a lens alignment apparatus. A layer of UV curable adhesive is sandwiched between the lens assembly and a mount for connecting the lens to the imager. The lens is then aligned to the imager using a jig part of the lens alignment apparatus in a multi-axis alignment process, as described below. The relative positions between the lens and imager may be adjusted by moving either the lens or the imager sensor or both. As such, up to 12 degrees of freedom control may be provided. Once aligned, the lens is fixed in place by snap curing the UV curable adhesive, followed by a thermal cure to finalise the fixture.

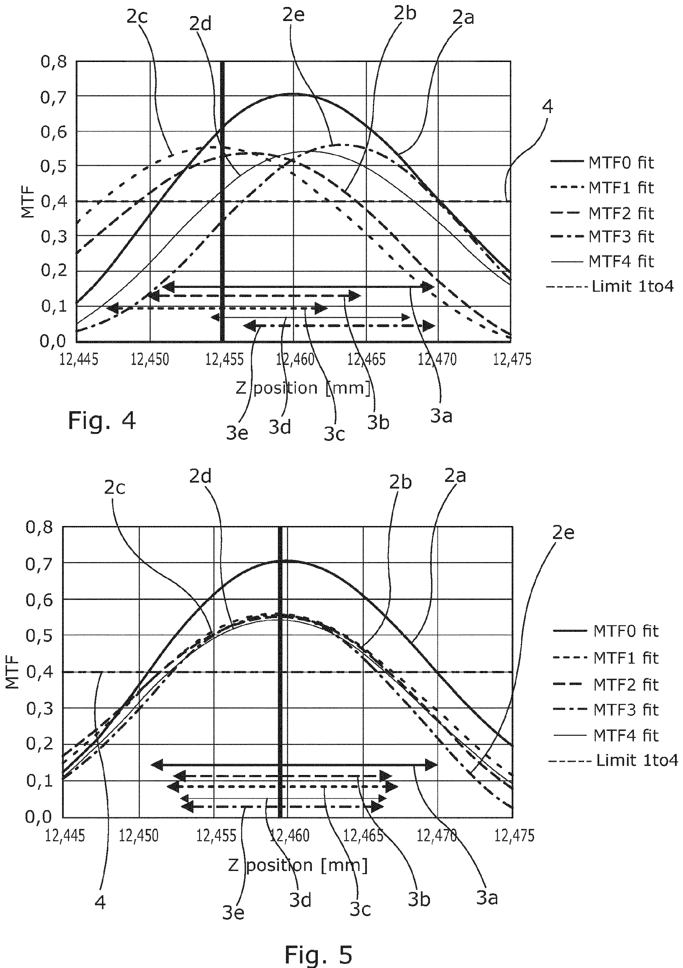

As shown in Figure 3, during the alignment process 10, an initial Z scan 11 is performed where the lens is moved in a Z direction, along the camera axis, until a rough focus is achieved. This places the lens in a suitable starting position for subsequent alignment. After this, a full lens Z scan 12 is performed. Figure 4 shows an example initial MTF response chart during this full lens Z scan 12. As shown, the MTF response characteristics 2a-e for each MTF ROI required under the camera's specifications are determined. The ROI focus windows 3a-e for each MTF region of interest are identified. Initially, these are out of alignment. For instance, this may be because the lens is tilted such at some ROIs at the periphery of the lens are tilted further away from the imager, whereas others are tilted closer. To correct this, the position of the lens relative to the imager is then adjusted in an adjustment step 13, for example by shifting the pitch, yaw, roll of the lens and/or the imager on its mounting relative to the imager. As the lens is tilted, the transverse (x/y) position of the lens relative to the imager may also be adjusted to realign the focussed image onto the centre of the imager in step 15.

Further Z scans may be performed to validate the positional changes until the ROI focus windows 3a-e have been aligned in a verification step 15. During this step, it is determined whether the focus windows are sufficiently aligned to meet a predetermined alignment threshold. If not, the lens is returned to the full lens Z scan 12 step. If the predetermined alignment threshold is met, the lens Z position is adjusted so that the centre of the combined depth of focus is optimised for the cameras specified requirements. In this respect, Figure 5 shows an illustrative MTF response chart at the end of the lens alignment process. As shown, the individual focus windows 3a-e have been aligned at a centred z position. It will be understood that the alignment process may also adjust the lens position to take into account adhesive shrinkage, known ageing characteristics, and corner weighting requirements. As such, the lens position may be set sightly off optimal to pre-emptively compensate for these known effects.

Once complete, the lens may then be fixed in place by curing the adhesive, as discussed above. Accordingly, in this way, the alignment process may maximise the depth of focus across all the applicable regions of interest. Consequently, a camera with a high long-life performance may be achieved because the regions of interest will be above the minimum optical performance requirements for longer. Therefore, better compensation of defocus related to ageing may be achieved.

It will be understood that the embodiments illustrated above show applications only for the purposes of illustration. In practice, embodiments may be applied to many different configurations, the detailed embodiments being straightforward for those skilled in the art to implement.

## Claims

1. A lens alignment method (10) comprising:
scanning (12) a plurality of regions of interest of the lens to determine optical characteristics (2a-e) for each region of interest as the position of the lens relative to an imager is adjusted;
determining a focus window (3a-e) for each region of interest based on the optical characteristics (2a-e), wherein determining the focus windows (3a-e) comprises determining positions where the optical characteristics (2a-e) are above a predetermined threshold; and
adjusting (13) the relative position of the lens to the imager based on the determined positions of the focus windows (3a-e) relative to one another, wherein the step of adjusting the position of the lens comprises determining a centre depth of focus for each focus window (3a-e) and adjusting the position of the lens in relation to the determined centre depth of focuses.

2. A lens alignment method (10) according to claim 1, wherein the scan (12) comprises determining MTF characteristics (2a-e) as the distance between the lens and the imager is varied.

3. A lens alignment method (10) according to any preceding claim, wherein the step of adjusting (13) the position of the lens comprises adjusting (13) the position for aligning the focus windows (3a-e) to within a predetermined range.

4. A lens alignment method (10) according to any preceding claim, wherein the step of adjusting (13) the position of the lens comprises adjusting one or more of the pitch, yaw, roll, position in the transverse plane, and position in the camera axis.

5. A lens alignment method (10) according to any preceding claim, wherein the step of adjusting (13) the position of the lens comprises applying a material compensation factor for compensating for material tolerances.

6. A lens alignment method (10) according to claim 5, wherein the material tolerances comprise material shrinkage and/or predicted aging movement characteristics.

7. A lens alignment method (10) according to any preceding claim, further comprising the step of providing the lens on a mount relative to the imager, wherein a curable adhesive is provided between the mount and the lens for fixing the lens in position when cured.

8. A lens alignment method (10) according to any preceding claim, further comprising the step of fixing the position of the lens once its position is adjusted.

9. A non-transient computer readable medium comprising instructions, which when executed by one or more processors controlling a lens alignment apparatus performs the method (10) of claims 1 to 8.

10. A lens alignment apparatus comprising:
a jig for holding a lens and an imager and adjusting their positions relative to one another;
an optical scanner for scanning a plurality of regions of interest of the lens to determine optical characteristics (2a-e) of the lens at each region of interest as the position of the lens relative to the imager is adjusted; and
a controller configured to determine a focus window (3a-e) for each region of interest based on the optical characteristics (2a-e), wherein determining the focus windows (3a-e) comprises determining positions where the optical characteristics (2a-e) are above a predetermined threshold, and adjust the relative positions of the lens to the imager based on the determined positions of the focus windows (3a-e) relative to one another, wherein adjusting the position of the lens comprises determining a centre depth of focus for each focus window (3a-e) and adjusting the position of the lens in relation to the determined centre depth of focuses.

## Patentansprüche

1. Linsenausrichtungsverfahren (10), umfassend:
Abtasten (12) einer Vielzahl von interessierenden Bereichen der Linse, um optische Eigenschaften (2a-e) für jeden interessierenden Bereich zu bestimmen, während die Position der Linse relativ zu einem Bildaufnehmer angepasst wird;
Bestimmen eines Fokusfensters (3a-e) für jeden interessierenden Bereich basierend auf den optischen Eigenschaften (2a-e), wobei das Bestimmen der Fokusfenster (3a-e) das Bestimmen von Positionen umfasst, an denen die optischen Eigenschaften (2a-e) über einem vorbestimmten Schwellenwert liegen; und
Anpassen (13) der Relativposition der Linse zu dem Bildaufnehmer basierend auf den bestimmten Positionen der Fokusfenster (3a-e) relativ zueinander, wobei der Schritt des Anpassens der Position der Linse das Bestimmen einer mittleren Schärfentiefe für jedes Fokusfenster (3a-e) und das Anpassen der Position der Linse in Bezug auf die bestimmte mittlere Schärfentiefe umfasst.

2. Linsenausrichtungsverfahren (10) nach Anspruch 1, wobei das Abtasten (12) das Bestimmen von MTF-Eigenschaften (2a-e) umfasst, während der Abstand zwischen der Linse und dem Bildaufnehmer variiert wird.

3. Linsenausrichtungsverfahren (10) nach einem der vorhergehenden Ansprüche, wobei der Schritt des Anpassens (13) der Position der Linse das Anpassen (13) der Position zum Ausrichten der Fokusfenster (3a-e) innerhalb eines vorbestimmten Bereichs umfasst.

4. Linsenausrichtungsverfahren (10) nach einem der vorhergehenden Ansprüche, wobei der Schritt des Anpassens (13) der Position der Linse das Anpassen eines oder mehrerer aus der Neigung, Gierung, Rollbewegung, Position in der Querebene und der Position entlang der Kameraachse umfasst.

5. Linsenausrichtungsverfahren (10) nach einem der vorhergehenden Ansprüche, wobei der Schritt des Anpassens (13) der Position der Linse das Anwenden eines Materialkompensationsfaktors zum Kompensieren von Materialtoleranzen umfasst.

6. Linsenausrichtungsverfahren (10) nach Anspruch 5, wobei die Materialtoleranzen Materialschrumpfung und/oder vorhergesagte Alterungsbewegungseigenschaften umfassen.

7. Linsenausrichtungsverfahren (10) nach einem der vorhergehenden Ansprüche, ferner umfassend den Schritt des Bereitstellens der Linse an einer Halterung relativ zu dem Bildaufnehmer, wobei zwischen der Halterung und der Linse ein aushärtbarer Klebstoff bereitgestellt wird, um die Linse nach dem Aushärten in ihrer Position zu fixieren.

8. Linsenausrichtungsverfahren (10) nach einem der vorhergehenden Ansprüche, ferner umfassend den Schritt des Fixierens der Position der Linse, nachdem deren Position angepasst worden ist.

9. Ein nichtflüchtiges computerlesbares Medium, das Anweisungen umfasst, die bei ihrer Ausführung durch einen oder mehrere Prozessoren, die eine Linsenausrichtungsvorrichtung steuern, das Verfahren (10) nach den Ansprüchen 1 bis 8 ausführen.

10. Linsenausrichtungsvorrichtung, umfassend:
eine Vorrichtung zum Halten einer Linse und eines Bildaufnehmers und zum Anpassen ihrer Positionen relativ zueinander;
einen optischen Scanner zum Abtasten einer Vielzahl von interessierenden Bereichen der Linse, um optische Eigenschaften (2a-e) der Linse in jedem interessierenden Bereich zu bestimmen, während die Position der Linse relativ zu dem Bildaufnehmer angepasst wird; und
eine Steuereinheit, die so konfiguriert ist, dass sie für jeden interessierenden Bereich basierend auf den optischen Eigenschaften (2a-e) ein Fokusfenster (3a-e) bestimmt, wobei das Bestimmen der Fokusfenster (3a-e) das Bestimmen von Positionen umfasst, an denen die optischen Eigenschaften (2a-e) über einem vorbestimmten Schwellenwert liegen, und die Relativpositionen der Linse zu dem Bildaufnehmer basierend auf den bestimmten Positionen der Fokusfenster (3a-e) relativ zueinander anpassen, wobei das Anpassen der Position der Linse das Bestimmen einer mittleren Schärfentiefe für jedes Fokusfenster (3a-e) und das Anpassen der Position der Linse in Bezug auf die bestimmte mittlere Schärfentiefe umfasst.

## Revendications

1. Procédé d'alignement de lentilles (10), comprenant :
le balayage (12) d'une pluralité de régions dignes d'intérêt de la lentille afin de déterminer des caractéristiques optiques (2a-e) pour chaque région digne d'intérêt étant donné que la position de la lentille par rapport à un imageur est réglée ;
la détermination d'une fenêtre de focalisation (3a-e) pour chaque région digne d'intérêt en fonction des caractéristiques optiques (2a-e), dans lequel la détermination des fenêtres de focalisation (3a-e) comprend la détermination de positions où les caractéristiques optiques (2a-e) sont supérieures à un seuil prédéfini ; et
le réglage (13) de la position relative de la lentille par rapport à l'imageur en fonction des positions déterminées des fenêtres de focalisation (3a-e) les unes par rapport aux autres, dans lequel l'étape de réglage de la position de la lentille comprend la détermination d'une profondeur de focalisation centrale pour chaque fenêtre de focalisation (3a-e) et le réglage de la position de la lentille par rapport à la profondeur des focalisations centrales déterminée.

2. Procédé d'alignement de lentilles (10) selon la revendication 1, dans lequel le balayage (12) comprend la détermination de caractéristiques de la fonction de transfert de modulation (MTF) (2a-e) étant donné que la distance entre la lentille et l'imageur varie.

3. Procédé d'alignement de lentilles (10) selon une quelconque revendication précédente, dans lequel l'étape de réglage (13) de la position de la lentille comprend le réglage (13) de la position pour aligner les fenêtres de focalisation (3a-e) à l'intérieur d'une plage prédéfinie.

4. Procédé d'alignement de lentilles (10) selon une quelconque revendication précédente, dans lequel l'étape de réglage (13) de la position de la lentille comprend le réglage d'un ou plusieurs éléments parmi le tangage, le lacet, le roulis, la position dans le plan transversal et la position dans l'axe de la caméra.

5. Procédé d'alignement de lentilles (10) selon une quelconque revendication précédente, dans lequel l'étape de réglage (13) de la position de la lentille comprend l'application d'un facteur de compensation de matériau destiné à compenser les tolérances de matériau.

6. Procédé d'alignement de lentilles (10) selon la revendication 5, dans lequel les tolérances de matériau comprennent un retrait de matériau et/ou des caractéristiques de mouvement de vieillissement prédites.

7. Procédé d'alignement de lentilles (10) selon une quelconque revendication précédente, comprenant en outre l'étape de fourniture de la lentille sur une monture par rapport à l'imageur, dans lequel un adhésif durcissable est fourni entre la monture et la lentille pour fixer la lentille en position lorsqu'il est durci.

8. Procédé d'alignement de lentilles (10) selon une quelconque revendication précédente, comprenant en outre l'étape consistant à fixer la position de la lentille une fois que sa position est réglée.

9. Support lisible par ordinateur non transitoire comprenant des instructions, qui, lorsqu'elles sont exécutées par un ou plusieurs processeurs commandant un appareil d'alignement de lentilles, effectue le procédé (10) selon l'une quelconque des revendications 1 ou 8.

10. Appareil d'alignement de lentilles (10, comprenant :
un gabarit destiné à maintenir une lentille et un imageur et à régler leurs positions l'un par rapport à l'autre ;
un dispositif de balayage optique destiné à balayer une pluralité de régions dignes d'intérêt de la lentille afin de déterminer des caractéristiques optiques (2a-e) de la lentille au niveau de chaque région digne d'intérêt étant donné que la position de la lentille par rapport à un imageur est réglée ; et
un dispositif de commande conçu pour déterminer une fenêtre de focalisation (3a-e) pour chaque région digne d'intérêt en fonction des caractéristiques optiques (2a-e), dans lequel la détermination des fenêtres de focalisation (3a-e) comprend la détermination de positions où les caractéristiques optiques (2a-e) sont supérieures à un seuil prédéfini, et le réglage des positions relatives de la lentille par rapport à l'imageur en fonction des positions déterminées des fenêtres de focalisation (3a-e) les unes par rapport aux autres, dans lequel le réglage de la position de la lentille comprend la détermination d'une profondeur de focalisation centrale pour chaque fenêtre de focalisation (3a-e) et le réglage de la position de la lentille par rapport à la profondeur des focalisations centrales déterminée.
